# EUROPEAN PATENT SPECIFICATION

(11) **EP 1 511 694 B1**
(45) Date of publication and mention of the grant of the patent: **27.02.2008**
(21) Application number: 03732602.2
(22) Date of filing: 30.05.2003
(51) Int. Cl.: C03B 27/044

(54) **METHOD FOR COOLING THE GLASS SHEET**
VERFAHREN ZUM ABKÜHLEN DER GLASSCHEIBE
PROCEDE DE REFROIDISSEMENT D'UNE FEUILLE DE VERRE

(30) Priority: 30.05.2002 FI 20021015
(43) Date of publication of application: 09.03.2005
(73) Proprietor: Feracitas Oy, 33720 Tampere (FI)
(72) Inventor: NIKANDER, Risto, FIN-33720 Tampere (FI)
(74) Representative: Nieminen, Taisto Tapani
(86) International application number: PCT/FI2003/000429
(87) International publication number: WO 2003/101898

(56) References cited:
- US-A- 4 586 946
- US-A- 5 620 492
- US-A- 6 050 814
- US-B1- 6 470 711

## Description

The invention relates to cooling sheet like objects like glass sheets, in which a glass plate is located on rollers and cooling air is blown towards the glass plate from below and from above through special nozzles. This presentation concentrates especially on flat glass tempering machines, but the invention can be applied also to other processes, in which plate like pieces are subjected to blowing, when they are moved on rollers.

### KNOWN ART

In all cases the air blow must be conducted away from the blowing point. In known methods the rollers and nozzle blocks alternate. As the work piece transported must extend at least over three rollers simultaneously, the minimum size of work piece transported will be easily quite large, because between three rollers there must be also two nozzle blocks. In order to have high cooling effect, the distance between the nozzle blocks should not be too large. For this reason the rollers and nozzle blocks are near one to another. This results as a small air exit area especially with wide glasses, because the air escape with them to the sides is more difficult.

When tempering thin glasses high cooling rates are required. In order to achieve high heat transfer coefficient economically, relatively small nozzle diameters, about 4 - 6 mm, small blowing distance, 15 - 25 mm, tight spacing of nozzles and high pressures are required, these resulting with remarkable air flows. Thus especially tempering of thin glasses results in high counter pressures in tempering and cooling sections. The counter pressure should be minimized, because even small counter pressure with high air flow results in remarkable power loss. Tempering with thin glasses takes only a short period of time, but during this time the momentary power draw rises to a very high level. As many electricity companies charge for high peak power, it is important, in addition to save energy, also reduce peak power. Additionally, if and when peak power can be reduced, the blowers, drive motors and other drive equipment, contactors, cables etc. can be dimensioned to be smaller so that tempering machine manufacturing costs are reduced.

When air nozzles are located in between the rollers and when the glasses break during tempering, the glass must have a chance to fall down between the rollers and nozzle blocks. This requirement to handle tempered glass necessitates the nozzles to be machined into metallic planar surface, most often to aluminium profile. In this way the nozzle is otherwise optimum, but around the exit point of the nozzle there is a planar area. With high air exit speeds high turbulence is created in this area and since tempering machine has even thousands of nozzles, the loss of power is very high. The nozzle, which exits from a planar surface, has low ejector effect; it grabs very little surrounding air with it. Remarkable ejector effect would increase cooling effect and would be advantageous.

In conventional tempering machines, in which nozzle blocks are located between the rollers, it is necessary to be able to lower them down. In this way a large enough space is created in between the rollers and the nozzle blocks so that pieces of glass can fall down. This "yawning", up/down movement of nozzle blocks causes additional expense for the tempering section due to the structures and lifting mechanism required. Other additional expenses are caused by flexible joints needed in air ducting. They are expensive, add service costs and increase pressure losses and energy consumption.

Earlier mentioned disadvantages have been tried to eliminate in such a way, that the glass is driven through a special tempering section. The tempering section is generally 1,2 m long and when a thin glass has been driven through it at relatively high speed, the glass gets temper. Normally the glass will not break down during this time, at least not in such a way, that the pieces would fall down. Thus it is possible to make pipe like nozzles into tempering section and actual nozzle blocks can be further away from the glass. Pipe like nozzles leave much more air exit area between the rollers and the nozzle blocks so that counter pressure is reduced. Pipe like nozzles, however, result in friction losses between the fast flowing air and walls of long nozzles, because the friction losses are relative to the length of the pipe or nozzles. Additionally the tempering machine will be longer and own blowers are needed for tempering section and cooling sections. Between the rollers there are number of pipe like nozzles. In this way the air has to exit steeply backwards so this tempering section does not offer best possible air exit route, either. The method is, however, generally used.

In both methods described earlier the air exits mainly between the rollers and nozzle blocks. This leads to increased distance between the nozzle rows at the location of the rollers, so this space remains momentarily with less cooling. More even tempering is achieved by the novel invention.

The over pressure in tempering section not only wastes energy and increases peak power draw, but also causes air flow in the direction of the furnace, which cools down the glass and makes tempering more difficult. It may also distort glass due to uneven cooling of glass. This is another reason to utilize this invention.

As there are no rollers on the top side, the air escape route above is larger and the counter pressure above is smaller. This causes thin glass to float, as they lift up from the rollers due to the counter pressure under the glass. This can also cause top side of the glass to cool faster, if the conditions and parameters are otherwise the same. This phenomenon is attempted to be limited by system disclosed in patent FI-B-76314 by making "false rollers" above the glass, in other words the counter pressure is added also above the glass and this way the power consumption above the glass is increased to the same level with underside power consumption. The false rollers also increase the manufacturing costs.

Another method to achieve the same effect is described in publication US-A-5094678, in which the nozzle block above is made wider than underside nozzle block so that the method causes similar disadvantages as the above mentioned Finnish patent, even up to the manufacturing costs.

Another reason causing glass floating phenomena, results from manufacturing method of nozzles and nozzle blocks. The surface of the nozzle blocks, in which the nozzles are machined, must be somewhat inclined downwards from the centre line of the nozzle block. This is because the glass, sometimes broken during tempering, must be able to flow down and also air exit way is smoother. Caused by this inclination the air jets from the nozzle blocks are partially directed towards the rollers.

This causes oblong overpressure air pocket into a triangular type space between the glass and the rollers. The air pocket also contributes to reduce the cooling effect of the tempering air, because the air speed hitting the glass is reduced. Because of this the direction of air jets should rather be slightly away from the rollers.

Partly the disadvantages of the earlier mentioned methods have been attempted to be reduced by locating the nozzle block under the rollers and to bring the air by the side of the roller in pipe like nozzles towards the glass. This has been presented in publication EP 0581742 A1, picture 3. Nozzle (6) length has to be at least 40 - 60 mm, because the roller (2) diameter must be about 30 - 40 mm. As economic tempering entails relatively small nozzle diameters and pipe like nozzle causes high friction losses, relative to the length of the nozzle, this type of nozzle must cause losses in order of 15 ... 20 % when calculated with nozzle diameter of 5 mm. This is a very high loss and remarkable waste with high powers. Also patent US-A-4,515,622 describes quite similar method with similar disadvantages. The biggest problem with them is the small, constant diameter pipe like nozzle.

Patent US-A-6,050,814 describes a convection furnace, in which the nozzle blocks have been located under the rollers, but blowing takes place from below the rollers tangentially to them. Method would never be suitable for tempering of thin glass due to the long blowing distance. Also publication EP-A-786437 describes a nozzle block under the roller. Also this case is related to convection heating furnace, in which the space between the rollers has been left empty for possible breakage of glass. Also this one has too large blowing distance thinking of glass tempering and this invention refers to Coanda effect with disadvantages described above.

Patent application EP-A-0114168, picture 5 describes a nozzle block under the roller and the sides of the nozzle block (12) have been brought above the centre line of the roller, quite dose to the glass. The air flow is conducted between the said edge and the roller upwards. This system is slot nozzle, in which the sides are the mentioned surfaces. Slot nozzle is, from energy point of view, uneconomical way of cooling the flat surface. Also text refers to Coanda effect, in which flow directed along a cylinder surface, tends to remain on the surface. In this case part of the air flow tends to continue straight due to inertia, part tends to follow the roller so after the air is exited from the slot, it quickly spreads over a large area, its speed is reduced and it cannot cool effectively. It is clear, that this cannot temper thin glass at all and not thicker ones economically. As the rollers of the tempering section are wound without exception with so called "Kevlar" winding, this kind of roller can in no way be the other surface of the slot nozzle except with extremely low efficiency. Due to the reasons explained this system, with advantageous arrangement of nozzle block under the roller, cannot achieve effective and economic cooling.

Characteristic to the apparatus according to this invention is that said closed spaces are positioned directly below the rollers leaving the space between the rollers free as much as possible so that the building up of counter pressure is limited as much as possible, further in that said closed spaces comprise one or two upwardly directed extensions, each extension having a cross section which is decreasing in the upward direction and each extension ending between the lower surface of the rollers and their axes, whereby the jets (J) of air are blown out of these upper ends of the extensions.

Characteristic to the method according to this invention is to use an apparatus as specified in claim 1.

The advantages available with the invention:

The purpose of this invention is to achieve especially energy saving, reduction of peak power and do it inexpensively, even saving manufacturing costs. The invention also helps to simplify the structure of tempering section, because the air ducting can be made simpler and some parts become unnecessary and they can be omitted. The invention can be utilized in tempering section, in cooling section or in their combinations. The invention is described in the following referring to the pictures, in which
- Figure: 1 shows glass tempering section seen from aside.
- Figure 2: shows blowing/jet arrangement seen from the end of the roller, in which the air is taken advantageously upwards alongside of the roller in nozzle block and it can be powerfully aimed at the glass, when so required, through known nozzles. Aside there are suitable nozzles to be used for this arrangement.
- Figure 3: shows another blowing/jet arrangement seen from the end of the roller, in which advantageous nozzles are used to bring the air upwards alongside of the rollers and air jets are aimed at the glass powerfully, when so required. The figure describes a conical nozzle, aside there are two other examples of advantageous nozzles for this arrangement.
- Figure 4: shows another blowing/jet arrangement seen from the end of the roller, in which the nozzles are made directly in upwardly pointing parts of nozzle block.
The nozzles can be either holes or slot type nozzles.
- Figure 5: describes low pressure channel, LP, which has been located under the roller and from which the air is led in between the nozzles and the roller as a low pressure air flow, AFLP.

Distinctive to the invention is, that the nozzle block NB is located under the roller R and tempering or cooling air is led upwards alongside of the roller in closed space(s), the cross section of which reduce(s) upwards so that no side of the said space is roller. The cross sectional decrease can be achieved by nozzles, nozzle block or their combination. It can be even or made in steps.

Compared to ordinary nozzle blocks with machined nozzles in them, the free air exit area is many times larger. The pressure losses of pipe like nozzles have been mentioned earlier. The novel part of invention reduces pressure losses to minimum when, on the other hand, optimum nozzles and blowing distances can be utilized so that reduction of peak power and saving of energy are achieved.

Normally the diameter of the tempering section roller is 25- 40 mm. Optimum blowing distance is, depending on the nozzle diameter, lower. Cooling effect and economy are dependent, among other things, nozzle diameter, blowing distance, internal design of nozzle, (efficiency) and ejector effect and the geometry and movement, by which the air jet impinge the glass and exit from the tempering section. The best tempering result is achieved, when the nozzle with best cooling efficiency is combined with nozzle block NB located under the roller. Conical nozzle looks the best for the purpose. It offers the possibility to optimize all above mentioned subjects and also maximize the air exit cross section. Furthermore, the direction of air jets can be optimized to be more direct against the glass or somewhat away from the rollers compared to the conventional equipment. These improve the efficiency of cooling.

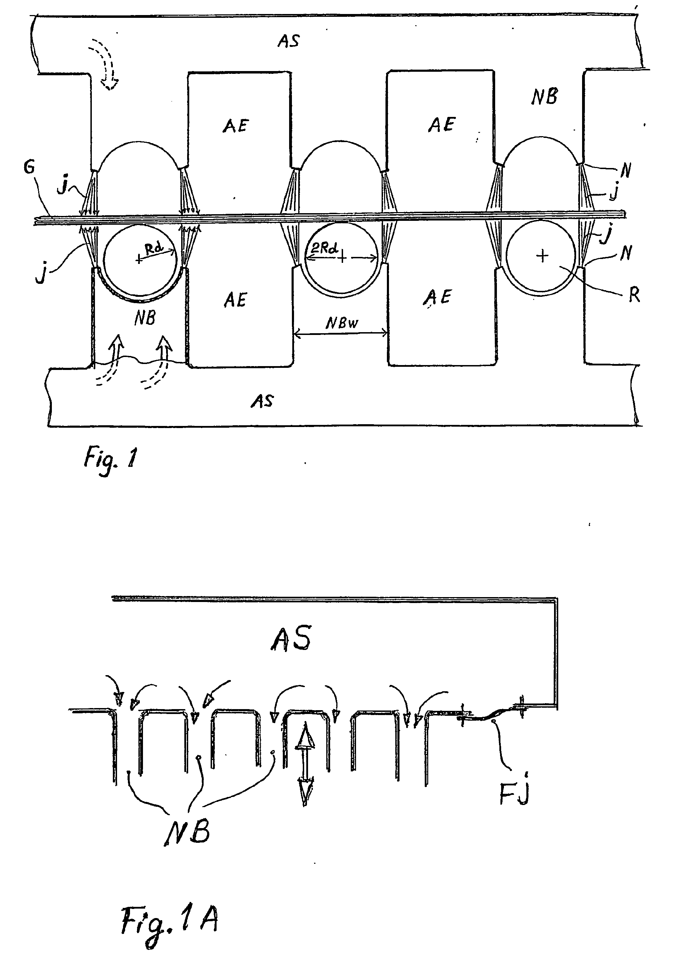

Figure 1 is a side view of a part of tempering section, in which there are glass G, tempering section roller R, nozzle blocks NB, nozzles N on the sides of nozzle blocks, from which the air jets J, needed for cooling, discharge. The air is fed from channel As and the air exits through channel AE.

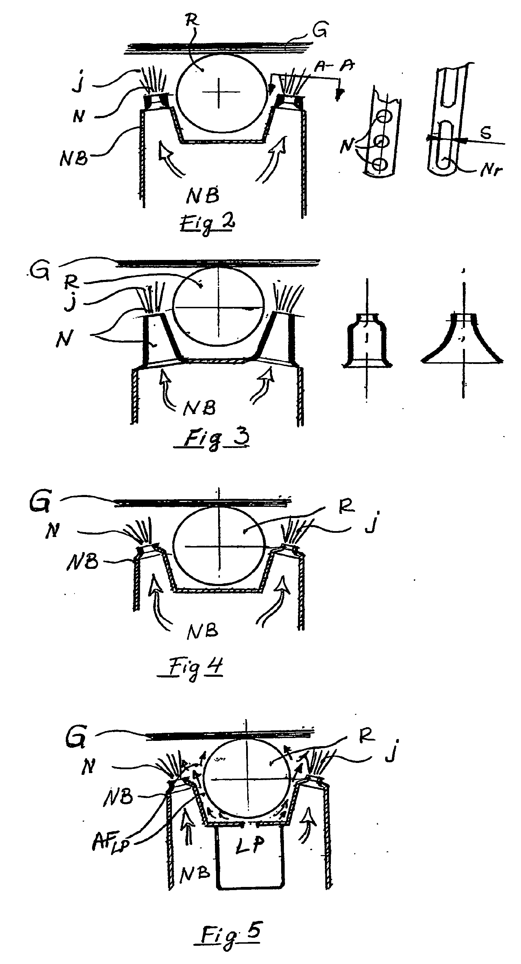

In figures 2, 3 and 4 there are different alternative for advantageous realization of the invention and some suitable nozzle alternatives for the same. They have good efficiency, with exception of slot nozzle. However, slot nozzle, too, belongs to the scope of patent claims.

Whether the nozzles are arranged on one or two sides of the roller, one or two rows in order to optimize the cooling effect can be done by calculation. Partially the best choice also depends on manufacturing technology and securing the free fall of broken glass. Also, a matter of optimization is diameter of nozzles, blowing distance and nozzle spacing.

The free space between the nozzle blocks, AE, is about 80 mm with ordinary size of tempering furnace, whether it is conventional or according to the present invention. The glass sometimes broken in tempering machines has sufficient space to fall down in between the nozzle blocks in machines according to present invention. The earlier mentioned "yawning", up and down movement of nozzle blocks is not, therefore, necessary with the present invention. This makes it possible to build air supply channel AS and nozzle blocks NB together. This further reduces the manufacturing costs of tempering and cooling sections as no expensive flexible bellows are required. The bellows would also cause pressure losses and thus energy waste as well as increased service requirements.

The air supply channel AS also functions as an air pressure equalizer. In this way also this part, often used in tempering machines, which causes extra expenses and power waste, can be omitted.

Furthermore the present invention facilitates skipping of every second nozzle block from after cooling section. This is possible, because one nozzle block blows from two sides of rollers so there is still blowing from between every consecutive roller. In this way cleaning of broken glass will be even easier.

In the present invention it is necessary to arrange only small, about 20 mm distance control of top nozzles for tempering of different glass thicknesses. The air supply channel AS can be made self supporting with little extra expense, so additional savings are possible with height adjustment of top nozzles. Another possibility is to make air supply channel AS fixed and to build nozzle blocks NB together and make flexible joint in between them. The flexible joint can be just a simple straight air tight cloth FJ in figure 1A, which is joined into air supply channel and plate supplying air into nozzle blocks. In this way the height adjustment of nozzle blocks only is needed. Small movement and self supporting, relatively light top structures allow the height adjustment to be made by relatively light lifting mechanisms directly from floor or low structures. This makes beam construction around tempering section and accompanying relatively heavy lifting gear unnecessary.

It is possible to feed air into channel LP under the roller according to figure 5. The air exits from slot into the space between roller and nozzle block and flows upwards alongside of the roller. In tempering machines there is often supply of air, which is not utilized in any useful way, for example when quenching is not taking place but after cooling is in process. The waste air can be used beneficially in this way even with low pressure. The air flow AFLP can be useful in two ways, to increase cooling effect directly on glass and partly to increase ejector air together with the primary nozzles. Another benefit is that it also prevents possibly broken glass from entering in between the nozzles and the roller.

The novel invention presents a possibility to improve the glass quality, reduce energy consumption and the peak power draw also in such a way, that between each roller spacing the heat transfer is somewhat reduced, but the glass transfer speed and the length of tempering section are proportionally increased. As an example was mentioned 1200 mm long tempering section and thin glass transfer speed of 0,6 m/s, when tempering time is 2 seconds. If the speed was taken 0,8 m/s, the length of tempering section should be 0,8 / 0,6 x 1200 mm = 1600 mm in order to maintain the same tempering time. In this way the air exiting from one roller spacing would be reduced and counter pressure would be reduced in the same proportion. In this way also the air flow into the direction of the furnace would be reduced. Also in other respects the increase of transfer speed with thin glasses improves the glass quality.

## Claims

1. An apparatus for cooling plate like objects, especially glass sheets (G), comprising rollers (R) on which a glass sheet can be placed, and means for blowing cooling air towards said glass sheet not only from above, but especially via nozzle blocks (NB) positioned below said rollers (R), which nozzle blocks (NB) form closed spaces, **characterized in that** said closed spaces are positioned directly below the rollers, leaving the space between the rollers free as much as possible so that the building up of counter pressure is limited as much as possible, **in that** said closed spaces comprise one or two upwardly directed extensions, each extension having a cross section which is decreasing in the upward direction and each extension ending between the lower surface of the rollers and their axes, whereby the jets (J) of air are blown out of these upper ends of the extensions.

2. An apparatus according to claim 1, **characterized in that** the closed space with the extensions of reduced cross section is made of a nozzle block (NB) ending upwards into nozzles (N), through which the jets (J) are blown out.

3. An apparatus according to claim 1, **characterized in that** each extension of reduced cross section is made of a nozzle (N), which is joined onto said nozzle block (NB) and from which the jet (J) is blown out.

4. An apparatus according to claim 1, **characterized in that** the extensions of reduced cross section are made as part of the nozzle block (NB) and in the top of them there are punched holes (N), through which the air jets (J) are blown out.

5. An apparatus according to claim 1, **characterized in that** the closed space with the extensions of reduced cross section is made of a combination of nozzle blocks (NB) and nozzles (N) through which the air jets (J) are blown out.

6. An apparatus according to any of claims 1 to 5, **characterized in that** at least below each roller below which a nozzle block is provided there is an air channel (LP) for low pressure air, through which channel air is blown into the space between the roller (R) and the nozzle block (NB) or between the roller and the extensions of reduced cross section.

7. An apparatus according to any of claims 1 to 6, **characterized in that** an air supply channel (AS) and the nozzle blocks (NB) are built integrated together.

8. An apparatus according to any of claims 1 to 6, **characterized in that** at least the upper air supply channel (AS) is stationary and at least the upper nozzle blocks (NB) are built integrated together therewith and the air supply channel (AS) and the nozzle blocks (NB) are joined flexibly (FJ) together so that the nozzle blocks (NB) can be adjusted vertically.

9. An apparatus according to any of claims 1 to 8, **characterized in that** the nozzle blocks (NB) are provided only below every second roller (R).

10. A method of cooling plate like objects, especially glass sheets, using an apparatus as specified in any of claims 1 to 9.

11. A method according to claim 10, **characterized in that** the glass transfer speed from a heating section into the cooling apparatus, which is an apparatus for tempering the glass sheets, exceeds 0,6 m/s.

## Patentansprüche

1. Ein Apparat zur Kühlung von plattenförmigen Gegenständen, besonders Glasscheiben (G), bestehend aus Rollen (R), auf welchen eine Glasscheibe gelegt werden kann, und Mittel um kalte Luft gegen die genannte Glasscheibe, nicht nur von oben, aber besonders durch Düsengruppen (NB) zu blasen, die unter den genannten Rollen (R) liegen, welche Düsengruppen (NB) geschlossene Räume bilden, **gekennzeichnet dadurch, dass** die genannten geschlossenen Räume direkt unter den Rollen liegen und so fiel freien Raum wie möglich zwischen den Rollen zu lassen, dass Entwicklung von Gegendruck so begrenzt wie möglich ist, sodass die genannten Räume eine oder zwei Verlängerungen in Richtung aufwärts haben, jede mit Querschnitfläche versehene Verlängerung die sich in Richtung aufwärts verkleinert, und jede Verlängerung die zwischen den unteren Flächen der Rollen und deren Achsen zu Ende geht, wobei die Luftstrahlen (J) von diesen oberen Enden der Verlängerungen ausgeblasen werden.

2. Ein Apparat gemäß Anspruch 1, **gekennzeichnet dadurch, dass** der geschlossene Raum mit Verlängerungen der reduzierten Querschnittfläche von Düsengruppe (NB) gebildet wird, die aufwärts in Düsen (N) zu ende gehen, durch welche die Luftstrahlen (J) ausgeblasen werden.

3. Ein Apparat gemäß Anspruch 1, **gekennzeichnet dadurch, dass** jede Verlängerung der reduzierten Querschnittfläche von einer Düse (N) gebildet wird die an die genannten Düsengruppe (NB) beigefügt wird, und durch welcher Düse der Strahl ausgeblast wird.

4. Ein Apparat gemäß Anspruch 1, **gekennzeichnet dadurch, dass** jede Verlängerung der reduzierten Querschnittfläche als ein Teil der Düsengruppe (NB) gebildet, wird, und es in ihrer Spitze gestanzte Löcher (N) geben, durch welchen Luftstrahlen (J) ausgeblasen werden.

5. Ein Apparat gemäß Anspruch 1, **gekennzeichnet dadurch, dass** der geschlossene Raum mit Verlängerungen der reduzierten Querschnittfläche aus einer Kombination von Düsen-gruppen (NB) und Düsen (N) gebildet werden, durch welchen Luftstrahlen (J) ausgeblasen werden.

6. Ein Apparat gemäß irgend einem der Ansprüche 1 - 5, **gekennzeichnet dadurch, dass** es wenigstens unter jede Rolle, die mit einer Düsengruppe versehen ist, einen Luftkanal (LP) mit niedrigen Druck gibt, durch welchen Kanal die Luft in die Spalte zwischen Rolle (R) und Düsengruppe (NB) oder zwischen Rolle und Verlängerungen der reduzierten Querschnittfläche geblasen wird.

7. Ein Apparat gemäß irgendeinem der Ansprüche 1 - 6, **gekennzeichnet dadurch, dass** ein Zuluftkanal (AS) und die Düsengruppen (NB) integriert zusammengebaut werden.

8. Ein Apparat gemäß einem der Ansprüche 1 - 6, **gekennzeichnet dadurch, dass** wenigstens der obere Zuluftkanal (AS) stationär ist, und wenigstens die oberen Düsen-gruppen (NB) integriert zusammen gebaut, und der Luftdistribution (AS) und Düsengruppen (NB) flexibel (FJ) an einander angeschlossen sind, damit die Düsengruppen (NB) vertikal reguliert werden können.

9. Ein Apparat gemäß einem der Ansprüche von 1 - 8, **gekennzeichnet dadurch, dass** es Düsengruppen (NB) nur unter jede Zweite Rolle (R) gibt.

10. Eine Methode zur Kühlung von plattenförmigen Gegenständen, besonders Glasscheiben, durch Anwendung von einem Apparat wie in jedem Anspruch 1-9 spezifiziert.

11. Eine Methodt gemäß Anspruch 10, **gekennzeichnet dadurch, dass** die Geschwindigkeit der Verschiebung der Glasscheibe von einer Heizungssektion zum Kühlapparat, der ein Apparat zur Härtung von Glasscheiben ist, 0,6 m/s überschreitet.

## Revendications

1. Un appareil pour refroidir des objets de forme plate, notamment des feuilles de verre (G), comprenant les rouleaux (R) sur lesquels une feuille de verre peut être placée ainsi que les moyens pour souffler l'air de refroidissement vers ladite feuille, non seulement par-dessus, mais surtout à travers les blocs de buses (NB) situés en dessous desdits rouleaux (R), ces blocs de buses (NB) formant des espaces fermés, **caractérisé en ce que** lesdits espaces fermés sont placés directement sous les rouleaux, ce qui laisse aussi libre que possible l'espace entre les rouleaux et, par conséquent, limitant autant que possible la formation de la contre-pression, et **en ce que** les espaces fermés comprennent une ou deux extensions en direction verticale dont chacune présente une section transversale devenant plus étroite en haut, et chaque extension se terminant entre la surface inférieure des rouleaux et leurs axes, ce qui fait que les jets (J) d'air soufflés sortent par les extrémités supérieures de ces extensions.

2. Un appareil selon la revendication 1, **caractérisé en ce que** l'espace fermé avec les extensions à section transversale se rétrécissant de bas en haut est formé par le bloc de buses (NB) se terminant en haut par les buses (N) à travers lesquelles les jets (J) sont soufflés.

3. Un appareil selon la revendication 1, **caractérisé en que** chaque extension à section transversale se rétrécissant de bas en haut est formée d'une buse (N) qui rejoint le bloc de buses (NB) et de laquelle le jet (J) est soufflé.

4. Un appareil selon la revendication 1, **caractérisé en ce que** les extensions à section transversale se rétrécissant de bas en haut sont faites de façon à ce qu'elles fassent partie du bloc de buses (NB) et que leur extrémité supérieure présente des trous poinçonnés (N) à travers lesquels les jets (J) d'air sont soufflés.

5. Un appareil selon la revendication 1, **caractérisé en ce que** l'espace fermé avec les extensions à section transversale se rétrécissant de bas en haut est formé par la combinaison des blocs de buses (NB) et les buses (N) à travers lesquelles les jets (J) d'air sont soufflés.

6. Un appareil selon l'une quelconque des revendications 1 à 5, **caractérisé en ce que,** au moins sous chaque rouleau sous lequel il y a un bloc de buses, il y a un canal d'air (LP) pour l'air basse pression à travers lequel l'air est soufflé dans l'espace entre le rouleau (R) et le bloc de buses (NB) ou entre le rouleau et les extensions à section transversale se rétrécissant de bas en haut.

7. Un appareil selon l'une quelconque des revendications 1 à 6, **caractérisé en ce que** le canal d'alimentation en air (AS) et les blocs de buses (NB) sont réalisés de façon à ce qu'ils soient liés l'un avec l'autre.

8. Un appareil selon l'une quelconque des revendications 1 à 6, **caractérisé en ce qu'**au moins le canal supérieur chargé de l'alimentation en air (AS) est immobile et qu'au moins les blocs de buses (NB) supérieurs sont réalisés de façon à être liés avec celui-là et que le canal d'alimentation en air (AS) et les blocs de buses (NB) sont reliés flexiblement (FJ) l'un à l'autre de manière à ce que les blocs de buses (NB) puissent être ajustés verticalement.

9. Un appareil selon l'une quelconque des revendications 1 à 8, **caractérisé en ce qu'**un bloc de buses (NB) n'est prévu que sous chaque deuxième rouleau (R).

10. Une méthode pour refroidir des objets de forme plate, notamment des feuilles de verre, en utilisant un appareil décrit dans l'une quelconque des revendications 1 à 9.

11. Une méthode selon la revendication 10, **caractérisée en ce que** la vitesse utilisée pour transférer la feuille de verre de la section de chauffage dans l'appareil de refroidissement, qui est un appareil pour tremper les feuilles de verre, est supérieure à 0,6 m/s.
